**Europäisches Patentamt**

**European Patent Office**

**Office européen des brevets**

(11) Publication number: **0 422 278 A1**

## (12) EUROPEAN PATENT APPLICATION

(21) Application number: **89119005.0**

(22) Date of filing: **12.10.89**

(51) Int. Cl.⁵: **F16H 61/28**

The title of the invention has been amended (Guidelines for Examination in the EPO, A-III, 7.3).

(43) Date of publication of application:
**17.04.91 Bulletin 91/16**

(84) Designated Contracting States:
**DE ES FR GB**

(71) Applicant: **R.G.B. S.p.A.**
**Corso Lecce, 96**
**I-10143 Torino(IT)**

(72) Inventor: **Brusasco, Enzo**
**Corso Re Umberto, 64**
**I-10129 Torino(IT)**

(74) Representative: **Jorio, Paolo et al**
**STUDIO TORTA Società Semplice Via Viotti 9**
**I-10121 Torino(IT)**

(54) **Shifting mechanism for the power transmission of a motor vehicle.**

(57) A transmission (1), particularly for motor vehicles, having at least a mobile control member (11) and a number of operating levers (4, 5, 6) selectively engageable by the control member (11) and each moved by the same for engaging or releasing a respective ratio. The control member (11) is connected to a drive unit (17) having two linear actuators (42, 50) connected to the control member (11) and selectively operated for achieving a first movement of the control member (11) for selecting a given operating lever (4, 5, 6), and a second engagement-release movement for shifting the selected operating lever (4, 5, 6).

Fig.1

EP 0 422 278 A1

# POWER TRANSMISSION PARTICULARLY FOR MOTOR VEHICLES

The present invention relates to a power transmission, particularly for motor vehicles.

The transmission featured on most currently marketed motor vehicles usually comprises at least three shafts fitted with gears designed to slide selectively and axially along the shafts for forming a given number of drive ratios.

Axial displacement of each gear is usually controlled by a respective operating lever having a central portion connected in sliding manner to a respective supporting shaft; a first end consisting of a fork connected to the respective gear; and a second end selectively engageable by a control member for axially engaging or releasing the operating lever along the supporting shaft.

The control member is usually operated manually by means of a lever or so-called "gearstick" designed to impart on the control member, either directly or via a drive, a first movement for selecting the required operating lever, and a second movement for shifting the same. Though enabling drivers to control vehicle performance as required, manual transmissions prove relatively tiresome under certain driving conditions, as when driving in town traffic. On many automobiles, particularly small c.c. types, a strong need is therefore felt for a standard manual transmission which may be converted, by means of a simple control, into an automatic or semiautomatic transmission.

The aim of the present invention is to provide a transmission designed to meet this requirement.

A further aim of the present invention is to provide a transmission which may be converted from manual to automatic or semiautomatic by making only minor, relatively low-cost changes to a standard manually-operated mechanical transmission.

Yet a further aim of the present invention is to provide a transmission designed to meet the above requirement by making only minor changes to a standard manually-operated mechanical transmission already assembled on the vehicle.

With these aims in view, according to the present invention, there is provided a transmission, particularly for motor vehicles, comprising at least a mobile control member, and a number of operating levers selectively engageable by said control member and each moved by the same in such a manner as to engage or release a respective gear ratio; characterised by the fact that it also comprises actuating means connected to said control member; said actuating means comprising a first and second linear actuator connected to said control member and selectively activated for achieving a first movement of said control member whereby said operating lever is selected and, respectively, a second movement whereby said selected operating lever is moved to and from the engaged position.

A non-limiting embodiment of the present invention will be described by way of example with reference to the accompanying drawings, in which:

Fig.1 shows a partial block view in perspective of a transmission in accordance with the teachings of the present invention;

Fig.2 shows a partially-sectioned top plan view of a detail in Fig.1;

Fig.3 shows a section along line III-III in Fig.2;

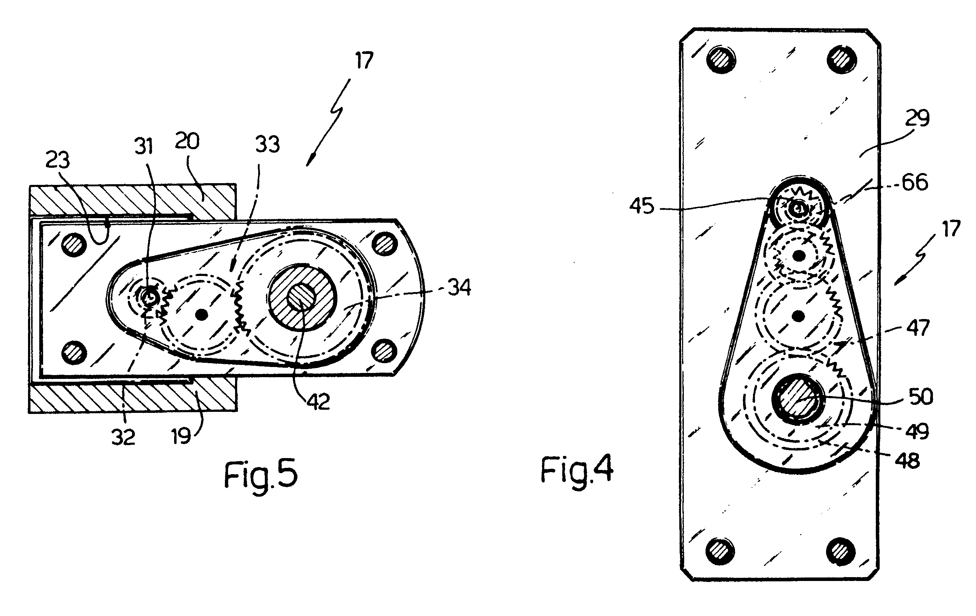

Fig.4 shows a section along line IV-IV in Fig.2;

Fig.5 shows a section along line V-V in Fig.3.

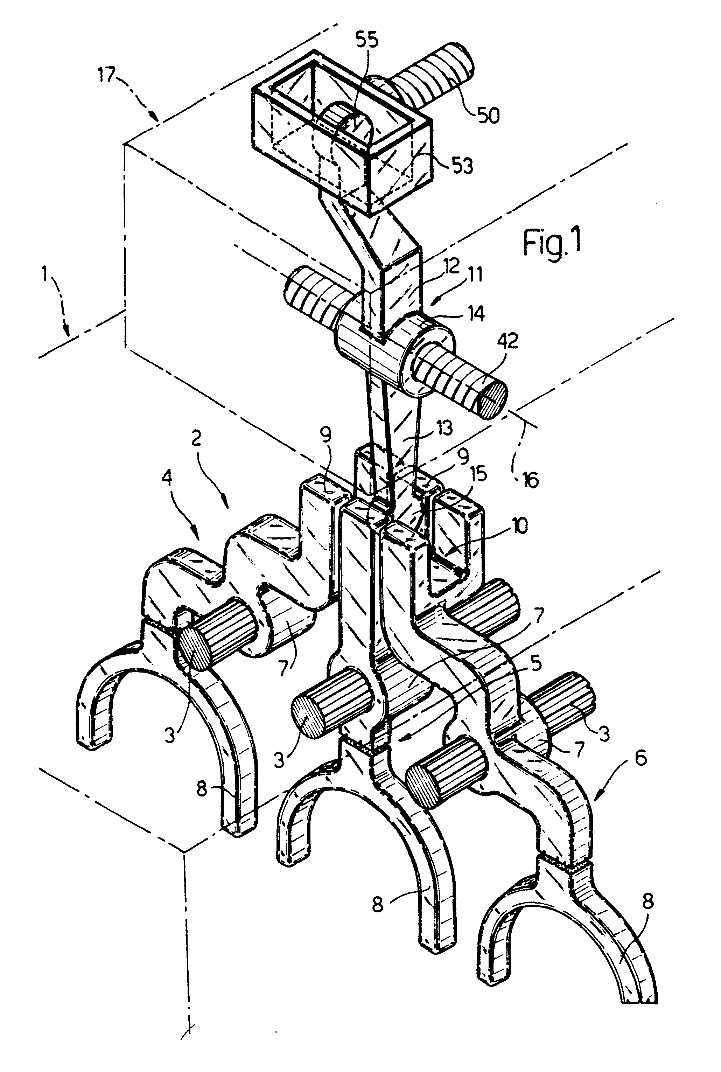

Number 1 in Fig.1 indicates a known mechanical transmission, the control section 2 of which comprises three fixed parallel splined shafts 3 supporting in sliding manner respective operating levers 4, 5 and 6. Each operating lever comprises a central portion having an internally-splined transverse coupling 7 engaged in sliding manner by a respective shaft 3; a first end portion in turn comprising a substantially semiannular fork 8 connected to a respective gear (not shown) located inside transmission 1 and designed to move with respective lever 4, 5 or 6 between a released position (Fig.1) and an engaged position; and a second end portion in turn comprising a substantially U-shaped element 9 which, with levers 4, 5 and 6 in the released position shown in Fig.1, is aligned with elements 9 on the other operating levers, so as to define a groove 10 extending crosswise in relation to shafts 3.

Transmission 1 also comprises a mobile control member consisting of a rocker arm 11 having two arms 12 and 13 extending in diametrically opposite directions from a central bush 14, with the end 15 of arm 13 engaging groove 10. Bush 14 presents an axis 16 parallel to the axis of groove 10, and rocker arm 11 is designed to perform two movements, a first selection movement consisting in moving along axis 16 for selectively engaging end 15 with one or other of elements 9, and a second engagement movement consisting in rotating about axis 16 for axially displacing one of levers 4, 5 or 6 along respective shaft 3.

On known transmissions of the aforementioned type, said selection and engagement movements are achieved by means of a known drive (not shown) connected to rocker arm 12 and controlled solely by a hand-operated gearstick (not shown). On transmission 1, however, alongside or in lieu of said drive, provision is made for a drive unit 17 (shown in detail in Fig.s 2, 3, 4 and 5) connected in removable manner to an outer surface of the case (not shown) of transmission 1.

Drive unit 17 comprises a frame 18 consisting of two plates 19 and 20 parallel to axis 16, perpendicular to shafts 3, and rendered integral with each other by a first intermediate cross member 21 and a second end cross member 22 defining two housings 23 and 24 between plates 19 and 20.

Holes 25 are formed through plates 19 and 20 for inserting bolts (not shown) securing drive unit 17 to the case (not shown) of transmission 1.

Said frame 18 supports two electromechanical linear actuators 26 and 27 housed respectively between plates 19 and 20 and inside a cup-shaped case 28 having a front flange 29 connected to the outer surface of plate 20.

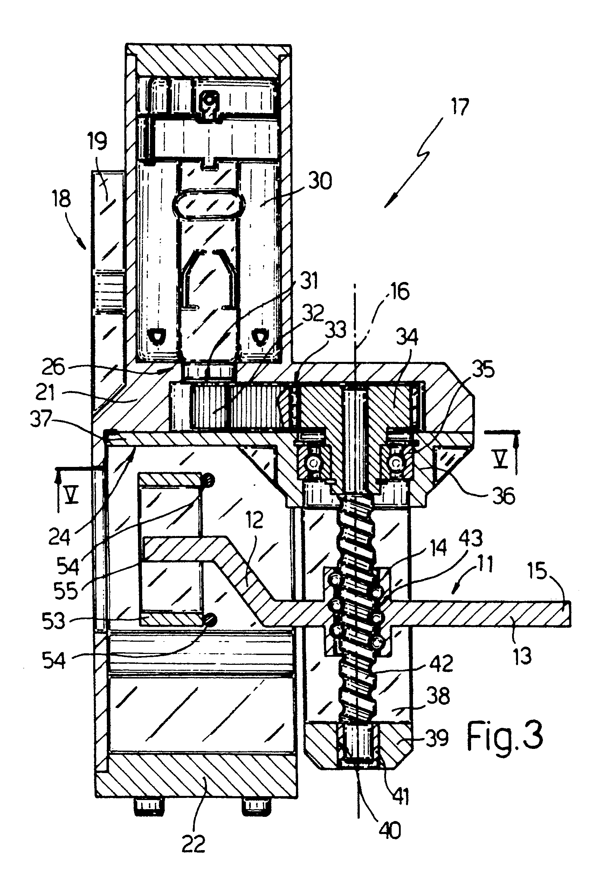

As shown in Fig.3, actuator 26 comprises a reversible electric motor 30 located inside housing 23 and having an output shaft 31 perpendicular to cross member 21 and fitted with the input gear 32 of a reduction unit 33, the output gear 34 of which is supported in rotary manner, via the interposition of a bearing 35, inside a coupling 36 having its axis parallel to that of shaft 31.

Coupling 36 is located to the side of housing 24, and is rendered integral with the surface of cross member 31 facing housing 24 by means of a connecting plate 37. From diametrically opposite points on coupling 36, there extend towards cross member 22 two parallel arms 38, the free ends of which are connected by a cross member 39 parallel to cross member 22. Cross member 39 presents a central through hole 40 having its axis parallel to that of shaft 31 and coincident with axis 16, which hole 40 houses in rotary manner, via the interposition of a bush 41, one end of a screw 42 coaxial with axis 16, the other end of which is fitted inside gear 34.

Screw 42 extends through bush 14 of rocker arm 11, and is connected to bush 14 via a reversible recirculating ball screw-nut screw coupling 43. Operation of motor 30 in either direction therefore causes bush 14, and consequently also rocker arm 11, to move in either direction along axis 16, thus resulting in said selection movement of end 15 of rocker arm 11 along groove 10.

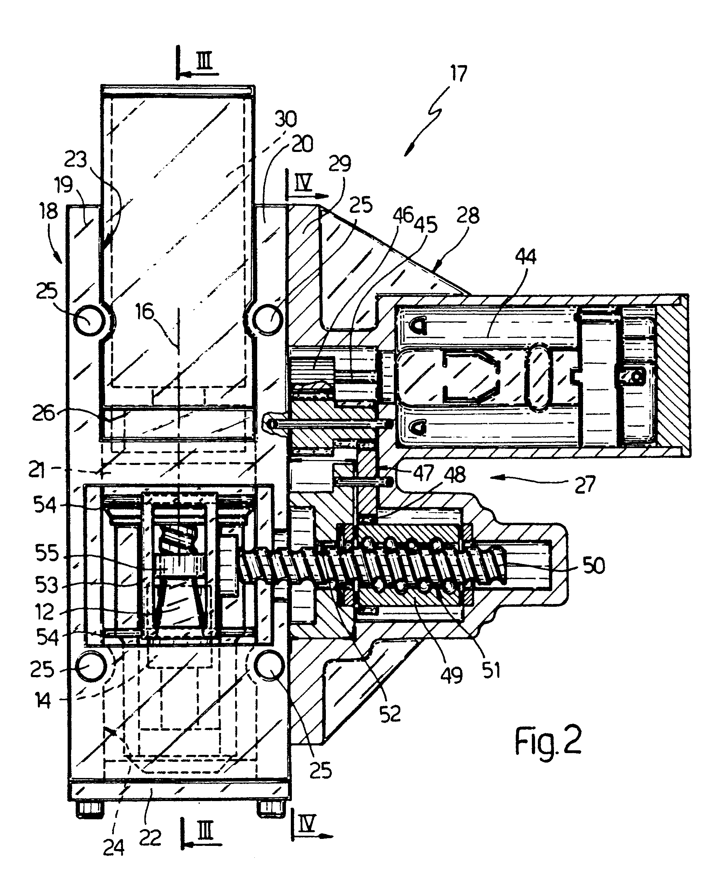

As shown in Fig.2, actuator 27 comprises a reversible electric motor 44 housed inside case 28 and having an output shaft 45 perpendicular to plates 19 and 20 and to axis 16. Shaft 45 is fitted with the input gear 46 of a reduction unit 47, the output gear 48 of which is integral with the outer surface of a cylindrical bush 49 parallel to shaft 45. Bush 49 is mounted for rotation inside case 28, and constitutes the intermediate element of a dual thrust bearing supported on case 28 outside plate 20. Bush 48 is fitted through with a screw 50 connected to bush 48 via a reversible recirculating ball screw-nut screw coupling 51 and coming out inside housing 24 through a hole 52 in wall 20.

Inside housing 24, the free end of screw 50 is connected to a rectangular enclosure 53 constituting the output element of actuator 27. Enclosure 53 is arranged with its longer axis parallel to axis 16, and is designed to slide, by virtue of screw 50, in a direction perpendicular to axis 16 and along rails 54 integral with plates 19 and 20.

Inside enclosure 53, end 55 of arm 12 of rocker arm 11 is mounted so as to slide in the direction of axis 16, and to move crosswise, perpendicular to axis 16, subsequent to displacement of enclosure 53 along rails 54. Consequently, whereas operation of actuator 26 provides for simply moving end 55 of rocker arm 11 along enclosure 53, displacement of enclosure 53 along rails 54 subsequent to operation of actuator 27 provides for moving end 55 crosswise, thus turning rocker arm 11 about axis 16.

Operation of motor 44 therefore causes end 15 of rocker arm 11 to perform said engagement movement crosswise in relation to groove 10.

By means of relatively straightforward mechanical alterations, for providing an accessory unit consisting of drive unit 17, a standard transmission 1 may thus be converted easily into an automatic or semiautomatic transmission. In fact, with the aid of a microprocessor, ratio selection may easily be rendered semiautomatic by means of straightforward control buttons, or fully automatic by operating drive unit 17 according to the resisting torque or other parameters varying with the same.

The fact that couplings 43 and 51 are reversible means that drive unit 17 may be disconnected for enabling transmission 1 to be operated manually by means of the gearstick.

To those skilled in the art it will be clear that changes may be made to transmission 1 as described herein without, however, departing from the scope of the present invention.

For example, in place of one control member consisting of rocker arm 11, provision may be made for two separate control members, each connected to a respective linear actuator for performing a given movement. In this case, one control member would act as a selection member for selectively shifting the other, acting as the engagement member, into a number of given operating positions, and the engagement member would be so connected to the selection member as to shift in relation to the same once the selected operating position is reached. Regardless of the solution adopted, the two linear actuators may be completely separate, instead of being structurally connected in a single drive unit.

**Claims**

1) - A transmission, particularly for motor vehicles, comprising at least a mobile control member, and a number of operating levers selectively engageable by said control member and each moved by the same in such a manner as to engage or release a respective gear ratio; characterised by the fact that it also comprises actuating means (17) connected to said control member (11); said actuating means (17) comprising a first and second linear actuator (26,27) connected to said control member (11) and selectively activated for achieving a first movement of said control (11) member whereby said operating lever (4,5,6) is selected and, respectively, a second movement whereby said selected operating lever (4,5,6) is moved to and from the engaged position.

2) - A transmission as claimed in Claim 1, characterised by the fact that each said linear actuator (26) (27) comprises a reversible electric motor (30) (44) and an axially-sliding output member comprising a screz (42) (50); said screw (42) (50) being connected to the output of said motor (30) (44) via the interposition of a screw-nut screw coupling (43) (51).

3) - A transmission as claimed in Claim 2, characterised by the fact that said coupling (43) (51) is a recirculating ball screw-nut screw coupling.

4) - A transmission as claimed in Claim 2 or 3, characterised by the fact that said coupling (43) (51) is reversible.

5) - A transmission as claimed in any one of the foregoing Claims, characterised by the fact that said first and second actuators (26,27) comprise respective first and second output members traveling axially in respective first and second directions at an angle to each other; said second output member comprising a guide member (53) traveling in said second direction and oriented in said first direction; said control member (11) being connected in sliding manner to said guide member (53) so as to travel along the same in said first direction by virtue of said first output member, and to travel with said guide member (53) in said second direction.

6)- A transmission as claimed in any one of the foregoing Claims, characterised by the fact that said control member (11) is a lever element; said first movement consisting in traversing in a predetermined direction, and said second movement in rotating about an axis (16) parallel to said predetermined direction.

7) - A control device connectable to a control member on a transmission, particularly a motor vehicle transmission, said transmission comprising a number of operating levers selectively engageable by said control member and each moved by the same for engaging or releasing a respective gear ratio; characterised by the fact that it comprises a first and second linear actuator (26,27) connectable to said control member (11) and selectively operated for achieving a first movement of said control member (11) for selecting a given said operating lever (4,5,6) and, respectively, a second movement for shifting said selected operating lever (4,5,6) to and from the engaged position.

Fig.1

Fig.2

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 817 468 (LEIGH-MONSTEVENS) * Abstract; figures 1-4; claims 7,13 * | 1,2,3,4 ,7 | F 16 H 61/28 |
| Y | | 5,6 | |
| X | FR-A-1 248 425 (FULLER MANUFACTURING) * Figures 1-3; claim 3 * | 1,7 | |
| Y | | 5,6 | |
| X | EP-A-0 310 387 (ISUZU MOTORS LTD) * Figure 1; abstract; page 1, column 2, lines 50-62 * | 1,7 | |
| A | | 2,3,5,6 | |
| X | US-A-2 881 625 (R.K. HODKIN) * Figure 5; page 1, column 1, lines 15-25; claims 1,2 * | 1,4,7 | |
| A | US-A-2 649 813 (E.J. BARTH) * Figures 1-3; claims 1-2 * | 2,4 | |
| A | US-A-4 440 035 (D.H. FOULK) * Figure 1; claims 1-3; abstract * | 2,4 | TECHNICAL FIELDS SEARCHED (Int. Cl.5) F 16 H |

The present search report has been drawn up for all claims

| Place of search | Date of completion of the search | Examiner |
|---|---|---|
| THE HAGUE | 15-05-1990 | VINGERHOETS A.J.L. |

EPO FORM 1503 03.82 (P0401)